# EUROPÄISCHE PATENTANMELDUNG

(11) **EP 4 782 312 A1**
(43) Veröffentlichungstag der Anmeldung: **29.07.2026**
(21) Anmeldenummer: 25154187.6
(22) Anmeldetag: 27.01.2025
(51) Int. Cl.: B62D 21/15, B62D 25/00, B60R 19/18

(54) **KRAFTFAHRZEUGBAUTEIL**

(71) Anmelder: Benteler Automobiltechnik GmbH, 33102 Paderborn (DE)
(72) Erfinder: FROST, Georg, 32839 Steinheim (DE); Hitz, Andreas, 59597 Erwitte (DE); Rabe, Frank, 32120 Hiddenhausen (DE)
(74) Vertreter: Ksoll, Peter

(57) **Zusammenfassung**

Ein Kraftfahrzeugbauteil (1) weist zumindest zwei metallische Bauteilkomponenten (3, 4, 5) auf. Die Bauteilkomponenten (3, 4, 5) sind miteinander vorzugsweise stoffschlüssig gefügt. Erfindungsgemäß besitzt zumindest eine Bauteilkomponente (3) eine Reibungsfläche (6), welche eine Reibstruktur (7) aufweist. Die Bauteilkomponenten (3, 4, 5) sind zu einem Hohlprofil zusammengesetzt und liegen an Flanschflächen (10, 11) aneinander. Die Bauteilkomponenten (3, 4, 5) können sich im Bereich der Reibungsfläche (6) kontaktieren oder mit Abstand zueinander angeordnet sein. Zumindest an einer Fügestelle (13) sind die Bauteilkomponenten (3, 4, 5) durch eine vorzugsweise stoffschlüssige Fügung verbunden. Im Falle einer Kollision werden die Bauteilkomponenten (3, 4, 5) gegeneinander gepresst. Hierbei gräbt sich die Reibstruktur (7) in die korrespondierende Kontaktfläche (12) der jeweils anderen Bauteilkomponente (3, 4, 5) ein, wodurch eine Relativbewegung der beiden Bauteilkomponenten (3, 4, 5) gehemmt wird.

## Beschreibung

Die Erfindung betrifft ein Kraftfahrzeugbauteil, welches zumindest zwei metallische Bauteilkomponenten aufweist, welche miteinander gefügt sind.

Kraftfahrzeugbauteile, insbesondere Strukturbauteile eines Kraftfahrzeugs wie Stoßfänger, Stoßfängerquerträger, A-, B- oder C-Säulen, Schweller oder Bodenschienen sind üblicherweise aus mehreren Bauteilkomponenten zusammengesetzt. Häufig werden solche Kraftfahrzeugbauteile auch mit weiteren Bauteilkomponenten verbunden und zu einer Baugruppe zusammengesetzt sowie in der Karosserie verbaut.

Insbesondere Kraftfahrzeug-Strukturbauteile haben die Aufgabe im Falle einer Kollision Kräfte umzuleiten oder durch Deformation Energie abzubauen, um die Fahrzeuginsassen vor Verletzungen zu schützen. Bei aus mehreren Bauteilkomponenten fügetechnisch verbundenen Kraftfahrzeugbauteilen kann es bei einer Deformation durch eine Kollision zu einem Versagen der Fügeverbindung kommen, was eine Verschiebung der Fügepartner, also der Bauteilkomponenten oder Teilen davon relativ zueinander zur Folge haben kann. Dies kann sich negativ auf eine Kraftumlenkung und die Energieabsorption auswirken. Diesem Problem kann mit einer Verstärkung der Fügeverbindungen, zum Beispiels durch eine erhöhte Anzahl von Schweißpunkten, begegnet werden. Dies hat jedoch einen höheren Aufwand bei den Fügeoperationen zur Folge, was die Kosten und die Herstellungszeiten erhöht. Auch kann je nach Fügeverfahren eine Verstärkung der Verbindung mit einer Erhöhung des Bauteilgewichts einhergehen.

Neben einer guten Crashperformance stellt sich herstellerseitig die Anforderung den zur Verfügung stehenden Bauraum bestmöglichst auszunutzen und gewichtsmäßig vorteilhafte Kraftfahrzeugbauteile bereitzustellen. Diese Zielvorgaben sollen im Einklang mit den hohen Anforderungen an die Sicherheitsstruktur eines Kraftfahrzeugs stehen. Dabei sind strenge Sicherheitsanforderungen zu erfüllen, die über Crashtests wie den sogenannten Pfahlaufpralltest (Pole-Test) geprüft werden.

Eine hohe Qualität der Kraftfahrzeugbauteile selber ist daher unerlässlich. Auch wenn die heutigen Kraftfahrzeugbauteile, insbesondere Kraftfahrzeug-Strukturbauteile, höchsten technischen Anforderungen genügen, erscheint eine weitere Steigerung des Energieabsorptionsvermögens im Falle einer Kollision erstrebenswert.

Der Erfindung liegt die Aufgabe zugrunde, ein Kraftfahrzeugbauteil funktional zu verbessern und dessen Verformungsverhalten und Energieabsorptionsvermögen zu steigern.

Die Lösung dieser Aufgabe besteht nach der Erfindung in einem Kraftfahrzeugbauteil gemäß Anspruch 1.

Vorteilhafte Ausgestaltungen, Weiterbildungen der Erfindung sind Gegenstand der abhängigen Ansprüche.

Ausgestaltungen und Modifikationen von Merkmalen des Kraftfahrzeugbauteils, die einzeln oder in Kombination die Erfindung technisch vorteilhaft ausgestalten oder weiterentwickeln, ergeben sich auch aus der Beschreibung und den beigefügten Zeichnungen.

Ein Kraftfahrzeugbauteil weist zumindest zwei metallische Bauteilkomponenten auf, welche miteinander gefügt sind.

Erfindungsgemäß besitzt zumindest eine Bauteilkomponente eine Reibungsfläche, welche eine Reibstruktur aufweist. Diese erste Bauteilkomponente ist dazu eingerichtet und bestimmt, mit einer weiteren zweiten Bauteilkomponente gefügt zu werden. Die zumindest zwei Bauteilkomponenten sind zusammengesetzt.Die zumindest zwei Bauteilkomponenten sind zumindest an einer Fügestelle durch eine Fügung verbunden.

Insbesondere handelt es sich bei der Fügung um eine stoffschlüssige Fügung, vorzugsweise um eine Schweißfügung.

Im Rahmen der Erfindung kann eine Fügung der zumindest zwei Bauteilkomponenten auch klebetechnisch oder mittels Nieten oder Clinchen erfolgen.

Die Bauteilkomponenten können sich im Bereich einer Reibungsfläche kontaktieren.

Möglich ist es auch, dass die Bauteilkomponenten im Bereich einer Reibungsfläche einen Abstand voneinander aufweisen.

Eine erste Bauteilkomponente weist die Reibungsfläche auf. Eine zweite Bauteilkomponente weist eine Kontaktfläche auf. Die Reibungsfläche der einen Bauteilkomponente und die Kontaktfläche der anderen Bauteilkomponente sind dazu eingerichtet und bestimmt, bei einem Crash bzw. einer Kollision aufeinander gepresst zu werden. Insbesondere werden die Reibungsfläche und die Kontaktfläche flächig aneinander gepresst.

Die mit einer Reibungsfläche versehene Bauteilkomponente ist im Bereich der Reibungsfläche aufgeraut. Die Reibungsfläche weist eine Reibstruktur auf, durch welche die Oberfläche und die Reibung vergrößert ist.

Bei einem Crash, also einem Aufprall auf ein Hindernis werden die miteinander gefügten Bauteilkomponenten gegeneinander gepresst, wodurch sich die Reibungsfläche der ersten Bauteilkomponente in die Kontaktfläche der zweiten Bauteilkomponente eingräbt. Hierdurch wird eine Bewegung der beiden Bauteilkomponenten relativ zueinander gehemmt. Die Haftreibung zwischen den beiden Bauteilkomponenten ist im Bereich der Reibungsfläche deutlich erhöht. Einer Verschiebung der beiden Bauteilkomponenten wird ein höherer Widerstand entgegengesetzt. Eine Relativbewegung zwischen den Bauteilen wird verringert. Der Verformungswiderstand wird erhöht und das Umformverhalten wird verbessert. Das Kraftfahrzeugbauteil ist funktional und insbesondere hinsichtlich des Energieabsorptionsvermögens bei einer Kollision verbessert.

Ein erfindungsgemäßes Kraftfahrzeugbauteil, beispielsweise ein Stoßfänger ist aus zumindest zwei Bauteilkomponenten zusammengefügt. Üblicherweise weist ein Stoßfänger eine erste Bauteilkomponente in Form eines Hutprofils auf, welches durch eine zweite Bauteilkomponente in Form eines Schließbleches geschlossen ist. Bei einer Kollision mit einem Pfahl oder einem ähnlichen stehenden Hindernis wird das Kraftfahrzeugbauteil stark deformiert. Die Reibungsfläche mit der Reibstruktur ist an der Fügefläche des Hutprofils eingebracht. Im Crashfall gräbt sich die Reibungsfläche in das Schließblech ein. Die Reibungsfläche mit der Reibstruktur wird dabei gezielt lokal dort eingebracht, wo eine Kollision erwartet wird. Dies ist bei einem Stoßfänger üblicherweise mittig in Querrichtung. Durch eine lokale gezielte Anordnung der Reibungsfläche kann der Produktionsaufwand, ebenso wie die Werkzeugkosten und auch die benötigte Presskraft bei der Erzeugung der Reibstruktur gering gehalten werden.

Praktische Versuche und Simulationen haben gezeigt, dass das Einbringen einer Reibungsfläche mit einer Reibstruktur die Energieaufnahme bei einer Deformation signifikant erhöht. Ein positiver Effekt ergibt sich weiterhin dadurch, dass durch die Reibungsfläche die Materialstärke der Bauteilkomponenten und damit deren Gewicht merklich reduziert werden kann, ohne damit eine Energieaufnahme zu reduzieren. Demzufolge können auch die Materialkosten und der Ressourcenverbrauch gesenkt werden.

Eine vorteilhafte Ausführungsform eines erfindungsgemäßen Kraftfahrzeugbauteils sieht vor, dass das Kraftfahrzeugbauteil zumindest zwei Bauteilkomponenten aufweist, welche voneinander verschiedene Härten besitzen. Vorzugsweise ist die Reibungsfläche in der härteren Bauteilkomponente vorgesehen. Die beiden Bauteilkomponenten sind vorzugsweise durch eine stoffschlüssige Fügung verbunden.

Eine Ausführungsform sieht vor, dass die Bauteilkomponenten im Bereich der Reibungsfläche aneinander liegen und sich kontaktieren.

Bei einer alternativen Ausführungsform sind die Reibungsflächen der einen Bauteilkomponente und eine Kontaktfläche der anderen Bauteilkomponetne mit Abstand zueinander angeordnet.

Bei beiden Ausführungsformen ist die Konfiguration und Anordnung der Reibungsfläche und der Kontaktfläche relativ zueinander dergestalt, dass bei einer Kollision die Bauteilkomponenten gegeneinander gepresst werden, wodurch sich die raue Oberfläche der Reibungsfläche in den Kontaktbereich bzw. die Oberfläche der weicheren zweiten Bauteilkomponente eingräbt, wodurch eine Relativbewegung der Fügepartner gehemmt wird.

Bei erfindungsgemäßen Kraftfahrzeugbauteilen handelt es sich insbesondere um Strukturbauteile wie Stoßfänger, Stoßfängerquerträger, Bumper ebenso wie Kraftfahrzeugsäulen, Schweller oder Bodenschienen, Bodenbleche, Batteriekästen, Hilfsrahmen oder Instrumententafelträger.

Eine stoffschlüssige Fügung kann durch Schweißen, Löten oder Kleben hergestellt sein. Weiterhin ist eine Fügung durch Setzfügen, insbesondere Clinchen oder auch durch Nieten möglich.

Besonders vorteilhaft bestehen die zumindest zwei metallischen Bauteilkomponenten aus Stahl. Diese sind insbesondere stoffschlüssig mittels Schweißen gefügt.

Die metallischen Bauteilkomponenten können auch aus einem Leichtmetallwerkstoff bestehen, insbesondere können die Bauteilkomponenten aus Aluminium bzw. einer Aluminiumlegierung bestehen.

Die Bauteilkomponenten weisen vorzugsweise aneinander liegende Flanschflächen auf, wobei eine Reibungsfläche in der Flanschfläche einer Bauteilkomponente liegt.

Eine Fügestelle kann im Bereich einer Reibungsfläche und/oder benachbart zu einer Reibungsfläche vorgesehen sein.

Eine Bauteilkomponente kann in einer Flanschfläche eine sich über den überwiegenden Teil der Länge einer Flanschfläche erstreckende Reibungsfläche aufweisen.

Die Bauteilkomponente kann auch eine Mehrzahl von Reibungsflächen aufweisen, verteilt über die Flanschfläche der Bauteilkomponente.

Eine Reibstruktur weist vorzugsweise eine Mehrzahl von nebeneinander angeordneten Reibungselementen auf. Reibungselemente sind vorzugsweise durch keilförmige und/oder kegelförmige Zähne oder Rippen gebildet.

Die Reibungselemente weisen eine Höhe auf. Die Bauteilkomponente weist in einem Bereich benachbart zur Reibungsfläche eine Wandstärke auf. Erfindungsgemäß ist die Höhe eines Reibungselements oder der Reibungselemente zwischen 3 % und 25 % der Wandstärke der Bauteilkomponente bemessen, vorzugsweise beträgt die Höhe der Reibungselemente zwischen 4 % und 16 % und insbesondere zwischen 5 % und 9 % der Wandstärke der Bauteilkomponente.

Die Wandstärke einer Bauteilkomponente aus Stahl ist zwischen 1,0 mm und 3,5 mm bemessen. Bei Bauteilkomponenten aus Leichtmetall, insbesondere aus Aluminium liegen die Wandstärken zwischen 2,0 mm und 5,0 mm.

Einzelne Reibungselemente können eine Höhe von 0,03 mm bis 1,25 mm, insbesondere von 0,1 mm bis 0,4 mm, besitzen einschließlich herstellungsbedingter Toleranzen.

Bei der Höhe kann es sich um die Höhe eines einzelnen Reibungselements oder um die mittlere Höhe aller Reibungselemente einer Reibstruktur handeln. Die mittlere Höhe der Reibungselemente einer Reibstruktur in einer Reibungsfläche ist das arithmetische Mittel, also der Durchschnittswert aus der Höhe der einzelnen Reibungselemente einer Reibstruktur.

Im Rahmen der Erfindung ist vorgesehen, dass die Reibstruktur insbesondere geprägt und/oder gehärtet ist.

Das Einbringen der Reibstruktur erfolgt vorzugsweise durch Prägen. Dabei kann die Bauteilkomponente optional zuvor erwärmt werden. Besonders vorteilhaft ist eine Kombination des Prägens der Reibstruktur mit einem Umformschritt während der Herstellung der Bauteilkomponente. Demzufolge wird die Produktionszeit nicht erhöht. Optional kann die Reibstruktur nach dem Prägen gehärtet werden, beispielsweise durch eine Laserbehandlung.

Besonders vorteilhaft ist das Einbringen der Reibstruktur in einen Presshärtevorgang integriert. Eine solche Integration sieht vor, dass zumindest eine Bauteilkomponente aus einem härtbaren Stahl besteht. Die Bauteilkomponente wird warmgeformt. Bei diesem Warmformvorgang wird die Reibstruktur durch Prägen im Umformwerkzeug erzeugt. Im Umformwerkzeug eingespannt wird die Bauteilkomponente pressgehärtet.

Ein vorteilhafter Aspekt der Erfindung sieht vor, dass die miteinander gefügten Bauteilkomponenten ein Hohlprofil bilden. Bei einem solchen Hohlprofil kann es sich um ein Zweikammerprofil oder um ein Mehrkammerprofil handeln.

Ein erfindungsgemäßes Kraftfahrzeugbauteil besteht aus zumindest einer ersten Bauteilkomponente und einer zweiten Bauteilkomponente, die aneinandergesetzt durch eine stoffschlüssige Fügung miteinander gefügt sind. Das Fügen der Bauteilkomponenten erfolgt insbesondere durch Schweißen, zum Beispiel Punkt- oder Laserschweißen.

Es können mehrere punktförmige Fügestellen oder nahtförmige Fügestellen vorgesehen sein.

Die Fügung und die Fügestellen können sowohl in einer Reibungsfläche als auch benachbart zu Reibungsflächen vorgesehen sein.

Soll eine Fügung, insbesondere eine Schweißfügung im Bereich einer Reibungsfläche und der Reibstruktur vermieden werden, ist es zweckmäßig mehrere Reibungsflächen mit Abstand zueinander an der Bauteilkomponente vorzusehen. Die Fügung erfolgt dann in den Bereichen außerhalb der Reibungsfläche an zwischen den Reibungsflächen liegenden Flanschabschnitten, in welchen sich die beiden Bauteilkomponenten kontaktieren.

Ein erfindungsgemäßes Kraftfahrzeugbauteil kann auch mehr als zwei Bauteilkomponenten aufweisen. Bei einem drei Bauteilkomponenten aufweisenden Kraftfahrzeugbauteil sind vorzugsweise an zumindest zwei Bauteilkomponenten Reibungsflächen mit Reibstrukturen vorgesehen.

Das stoffschlüssige Fügen der Bauteilkomponenten kann alternativ zu Schweißen auch klebtechnisch mittels Einsatz eines Klebstoffes oder löttechnisch in einem Lötprozess erfolgen. Die Reibungsfläche mit der Reibstruktur im Bereich der Fügefläche kann sich dabei positiv auf die Haftung eines Klebstoffs oder eines Lots auswirken.

Die Erfindung ist nachfolgend anhand von in den Zeichnungen dargestellten Ausführungsbeispielen näher beschrieben. Es zeigen:
- Figur 1: in perspektivischer Darstellung eine erste Bauteilkomponente in Form eines Hutprofils mit einer durchgängigen Reibungsfläche an Flanschflächen;
- Figur 2: eine Bauteilkomponente mit einer teilweise unterbrochenen Reibungsfläche an einem Flansch;
- Figur 3: eine Bauteilkomponente mit einer lokal begrenzt angeordneten Reibungsfläche an einem Flansch;
- Figur 4: ein Kraftfahrzeugbauteil gebildet aus zwei miteinander gefügten Bauteilkomponenten im Querschnitt;
- Figur 5: eine weitere Ausführungsform eines Kraftfahrzeugbauteils;
- Figur 6: ein Kraftfahrzeugbauteil aufweisend drei miteinander gefügte Bauteilkomponenten;
- Figur 7: eine Ansicht auf eine Bauteilkomponente mit der Darstellung von zwei Reibungsflächen an Schenkeln eines Hutprofils;
- Figur 8: eine Ansicht auf eine Bauteilkomponente mit der Darstellung von zwei Reibungsflächen an rückseitigen Steg eines Hutprofils;
- Figur 9: technisch vereinfacht und schematisiert einen Ausschnitt aus zwei Bauteilkomponenten mit der Darstellung einer Reibungsfläche an einer ersten Bauteilkomponente und
- Figur 10: verschiedene Ausführungsformen von Reibstrukturen und deren Reibelementen.

Einander entsprechende Bauteile, Bauteilkomponenten und Teile davon sind in den Figuren mit den gleichen Bezugszeichen versehen.

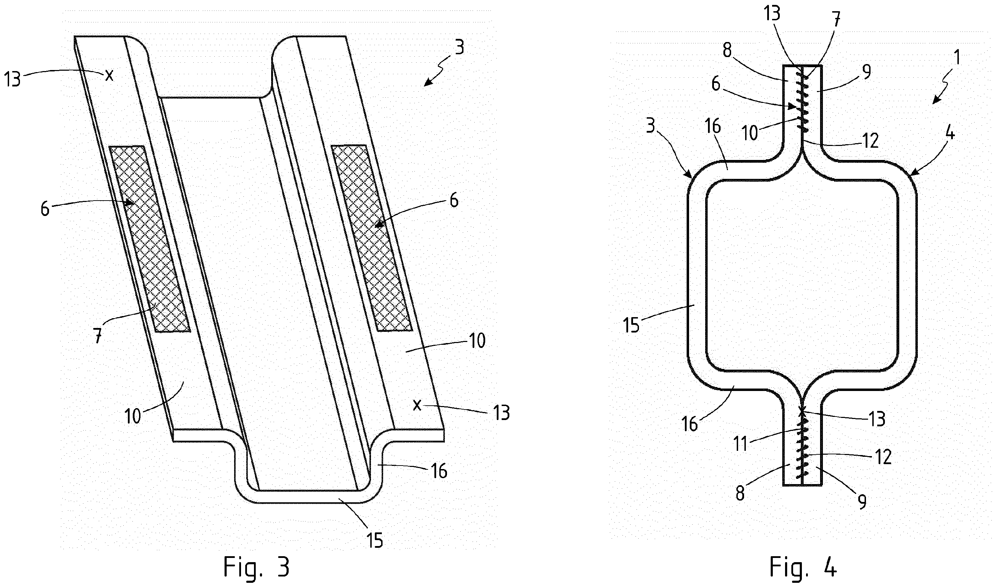

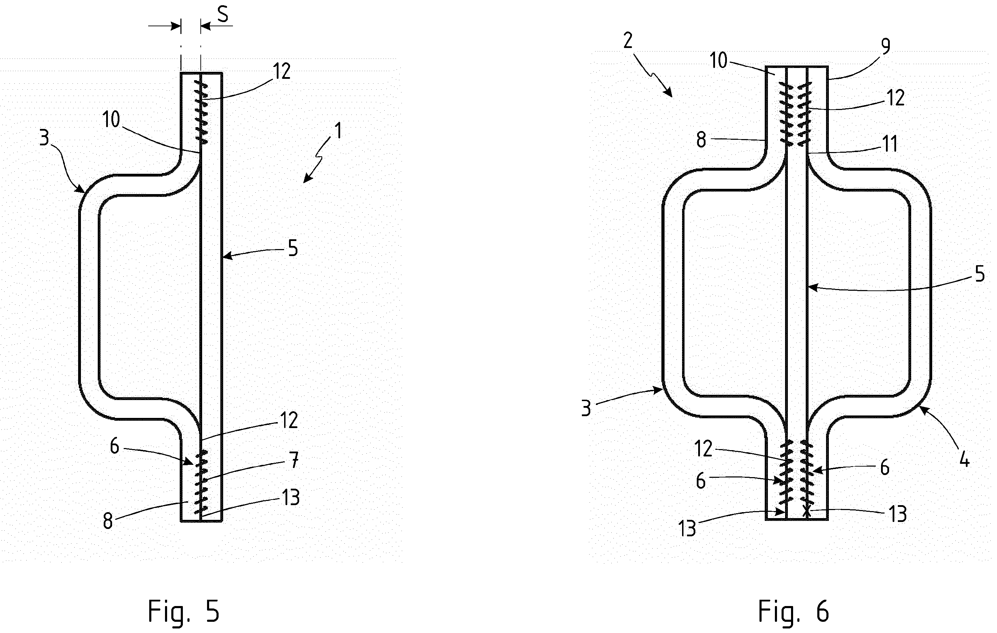

Ein erfindungsgemäßes Kraftfahrzeugbauteil 1 ist jeweils in einem Querschnitt in den Figuren 4 und 5 dargestellt. Ein weiteres erfindungsgemäßes Kraftfahrzeugbauteil 2 zeigt die Darstellung der Figur 6 ebenfalls in einem Querschnitt.

Das Kraftfahrzeugbauteil 1 gemäß der Darstellung der Figuren 4 und 5 weist im Wesentlichen eine erste metallische Bauteilkomponente 3 und eine zweite metallische Bauteilkomponente 4 auf, die stoffschlüssig miteinander gefügt sind.

Das Kraftfahrzeugbauteil 2 gemäß der Darstellung der Figur 6 weist drei metallische Bauteilkomponenten 3, 4 und 5 auf, welche ebenfalls miteinander stoffschlüssig gefügt sind.

Die Bauteilkomponenten 3, 4 und 5 bestehen aus Stahl, insbesondere einem Mangan-Bor-Stahl. Dieser ist besonders für das Warmumformen und Presshärten geeignet.

Bei dem Kraftfahrzeugbauteil 1 gemäß der Darstellung von Figur 4 ist sowohl die erste Bauteilkomponente 3 als auch die zweite Bauteilkomponente 4 als langgestrecktes Hutprofil ausgeführt. Die erste Bauteilkomponente 3 und die zweite Bauteilkomponente 4 sind durch eine stoffschlüssige Fügung gefügt. Die erste Bauteilkomponente 3 besitzt eine Reibungsfläche 6. Die Reibungsfläche 6 weist eine Reibstruktur 7 auf. Jede Bauteilkomponente 3, 4 weist Flansche 8, 9 mit Flanschflächen 10, 11 auf. Die Flansche 8, 9 und die Flanschflächen 10, 11 liegen aneinander. Die Reibungsfläche 6 mit der Reibstruktur 7 ist in den Flanschflächen 10 in jedem der beiden Flansche 8 der ersten Bauteilkomponente 3 vorgesehen.

Das Kraftfahrzeugbauteil 1 gemäß der Darstellung der Figur 5 weist eine erste Bauteilkomponente 3 in Form eines Hutprofils auf, welche mit einer zweiten Bauteilkomponente 5 in Form eines Schließblechs verbunden ist.

Die Darstellung des Kraftfahrzeugbauteils 2 gemäß der Darstellung der Figur 6 umfasst drei Bauteilkomponenten 3, 4, 5, die stoffschlüssig miteinander verbunden sind. Eine erste Bauteilkomponente 3 und eine zweite Bauteilkomponente 4 sind jeweils als Hutprofil ausgeführt. Zwischen der ersten Bauteilkomponente 3 und der zweiten Bauteilkomponente 4 ist eine dritte metallische Bauteilkomponente 5 in Form einer Zwischenlage integriert. Jeweils an Flanschflächen 10, 11 der ersten Bauteilkomponente 3 und der dritten Bauteilkomponente 5 ist eine Reibungsfläche 6 mit einer Reibstruktur 7 vorgesehen.

Die Bauteilkomponenten 3 und 4 bzw. 3, 4 und 5 kontaktieren einander und sind miteinander stoffschlüssig gefügt.

Bei dem Kraftfahrzeugbauteil 1 gemäß der Darstellung der Figur 4 liegen die Flansche 8, 9 und die Flanschflächen 10, 11 der Bauteilkomponenten 3 und 4 aneinander, wobei die Reibungsfläche 6 mit der gegenüberliegenden Kontaktfläche 12 der Bauteilkomponente 4 in Kontakt steht.

Bei dem Kraftfahrzeugbauteil 1 gemäß der Darstellung von Figur 5 liegt die zweite Bauteilkomponente 5, welches ein Schließblech ist, an den Flanschen 8 der ersten Bauteilkomponente 3 an. Hierbei kontaktieren sich die Bauteilkomponenten 3 und 5, wobei die Reibungsflächen 6 und die Kontaktflächen 12 der zweiten Bauteilkomponente 5 einander kontaktieren.

Bei dem Kraftfahrzeugbauteil 2 gemäß der Darstellung von Figur 6 sind Reibungsflächen 6 in den Flanschflächen 10 und 11 der Flansche 8 und 9 der Bauteilkomponenten 3 und 4 vorgesehen. Zwischen den Bauteilkomponenten 3 und 4 ist die Zwischenlage, also die dritte Bauteilkomponente 5 integriert. Kontaktflächen 12 der dritten Bauteilkomponente 5 treten in Kontakt jeweils mit einer Reibungsfläche 6 der ersten Bauteilkomponente 3 und der zweiten Bauteilkomponente 4.

Die Flanschflächen 10, 11 und die Kontaktflächen 12 der Bauteilkomponenten 3, 4, 5 liegen aneinander. Eine bzw. jede Reibungsfläche 6 liegt in einer Flanschfläche 10, 11 einer Bauteilkomponente 3, 4, 5

An zumindest einer Fügestelle 13 sind die Bauteilkomponenten 3, 4, 5 durch eine stoffschlüssige Fügung verbunden. Vorzugsweise erfolgt die stoffschlüssige Fügung durch Schweißen. Hierbei werden üblicherweise eine Mehrzahl von punkt- oder nahtförmiger Fügestellen 13 aneinander kontaktierenden Flanschflächen 10, 11 der Bauteilkomponenten 3, 4, 5 gesetzt.

Die stoffschlüssige Fügung kann auch eine Klebstoffverbindung oder eine Lötverbindung sein.

Fügestellen 13 sind in den Figuren 4, 5 und 6 exemplarisch gekennzeichnet.

Die gefügten Bauteilkomponenten 3 und 4 bzw. 3, 4 und 5 bilden ein Hohlprofil. Bei dem Kraftfahrzeugbauteil 1 ist dies ein Einkammerhohlprofil. Bei dem Kraftfahrzeugbauteil 2 handelt es sich um ein Zweikammerhohlprofil.

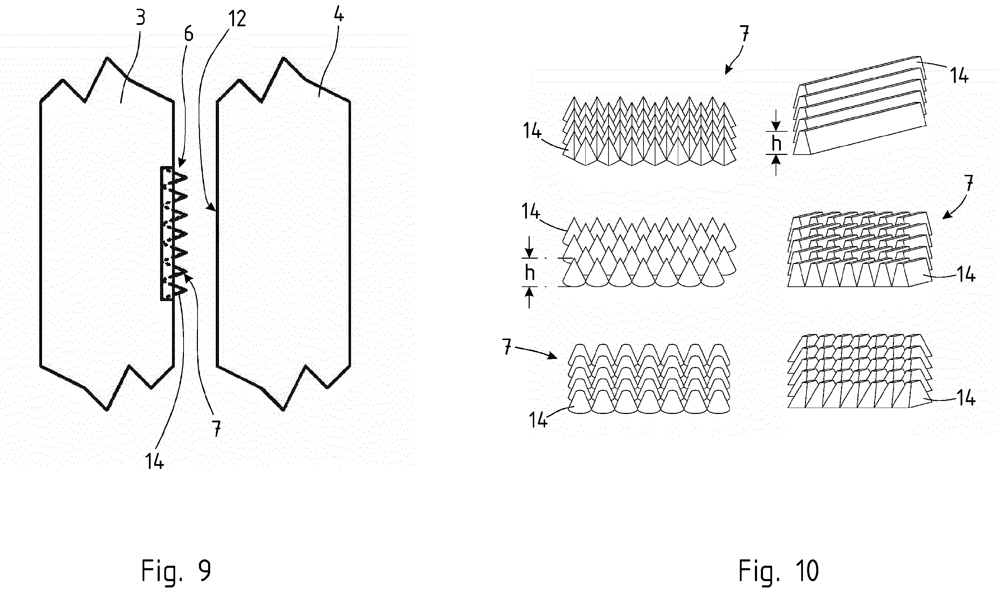

Figur 9 zeigt schematisch jeweils einen Ausschnitt aus einer ersten Bauteilkomponente 3 und einer zweiten Bauteilkomponente 4. Die erste Bauteilkomponente 4 weist eine Reibungsfläche 6 mit einer Reibstruktur 7 auf.

Die Reibstruktur 7 vergrößert die Oberfläche im Bereich der Reibungsfläche 6 und erhöht die Haftreibung zwischen der Reibungsfläche 6 und einer Kontaktfläche 12 der zweiten Bauteilkomponente 4.

Eine Fügestelle 13 kann innerhalb einer Reibungsfläche 6 und/oder außerhalb zu einer Reibungsfläche 6 vorgesehen sein.

Wie insbesondere die Darstellung der Figur 10 zeigt, weist eine Reibstruktur 7 eine Vielzahl nebeneinander angeordneter Reibungselemente 14 auf. Die Reibungselemente 14 sind Erhebungen, vorzugsweise sind Reibungselemente 14 durch keilförmige oder kegelförmige Zähne oder Rippen gebildet.

Insbesondere ist eine Reibstruktur 7 prägetechnisch hergestellt. Dies erfolgt vorzugsweise im Umformprozess bei der Herstellung einer mit der Reibungsfläche 6 versehenen Bauteilkomponente 3 bzw. 4. Die Reibstruktur 7 ist geprägt.

Die Reibstruktur 7 ist vorzugsweise gehärtet. Eine Härtung der Reibstruktur 7 erfolgt besonders vorteilhaft durch die Kombination des Prägens zur Herstellung der Reibungsfläche 6 bzw. der Reibstruktur 7 mit einem Umformschritt während der Herstellung der Bauteilkomponente 3, 4. Das Prägen der Reibungsfläche 6 mit der Reibstruktur 7 ist in die umformtechnische Herstellung der Bauteilkomponente 3, 4 integriert.

Besonders vorteilhaft ist zumindest eine Bauteilkomponente 3, 4, 5 warmumgeformt und pressgehärtet. Vorzugsweise ist die Bauteilkomponente 3, 4, die mit der Reibungsfläche 6 und der Reibstruktur 7 versehen wird, warmumgeformt und pressgehärtet.

Ein weiterer vorteilhafter Aspekt sieht vor, dass zumindest eine erste Bauteilkomponente 3 und eine zweite Bauteilkomponente 4 bzw. 5 eines Kraftfahrzeugbauteils 1 bzw. 2 eine voneinander verschiedene Härte aufweisen.

Insbesondere ist die Härte der Bauteilkomponente 3, die mit der Reibungsfläche 6 versehen ist, härter als die zweite Bauteilkomponente 4 bzw. 5, die mit der ersten Bauteilkomponente 3 stoffschlüssig gefügt ist.

Die Reibungselemente 14 weisen eine Höhe h auf (siehe hierzu insbesondere die Darstellung der Figur 10). Die Bauteilkomponente 3 bzw. 4 weist zumindest in einem Bereich benachbart zu einer Reibungsfläche 6 eine Wandstärke s auf. Die Höhe h ist zwischen 3 % und 25 % der Wandstärke s bemessen, bevorzugt liegt die Höhe h zwischen 4 % und 16 % und insbesondere zwischen 5 % und 9 % der Wandstärke s.

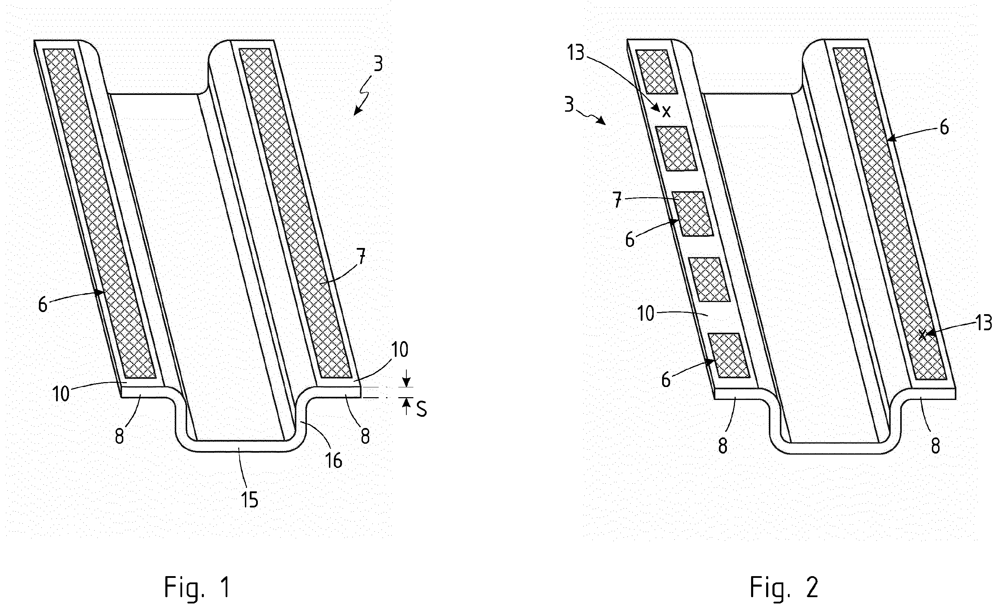

Die Figuren 1 bis 3 sowie 7 und 8 zeigen jeweils in einer perspektivischen Darstellung eine erste Bauteilkomponente 3 in Form eines Hutprofils.

Die Bauteilkomponente 3 ist dazu eingerichtet und bestimmt, mit einer weiteren Bauteilkomponente 4 und/oder 5 zusammengesetzt und stoffschlüssig gefügt zu werden. Hierbei liegen die Bauteilkomponenten 3 und 4 bzw. 5 an Flanschflächen 10, 11 aneinander, wobei eine Reibungsfläche 6 und deren Reibstruktur 7 mit einer Kontaktfläche 12 aneinander liegt.

Eine Bauteilkomponente 3 wird durch zumindest eine zweite Bauteilkomponente 4, 5 zu einem Kraftfahrzeugbauteil 1, 2 komplettiert.

Die als längsgestrecktes Hutprofil konfigurierte erste Bauteilkomponente 3 weist einen Steg 15 auf, an welchen sich beidseitig jeweils ein Seitenschenkel 16 anschließt. An die Seitenschenkel 16 schließen sich jeweils nach außen gerichtete Flansche 8 an. Die Flansche 8 erstrecken sich in Längsrichtung entlang der Länge der Bauteilkomponente 3.

In den Figuren 1 bis 3 sowie 7 und 8 sind Ausführungen und Anordnungen verschiedener Reibungsflächen 6 dargestellt.

In einer Reibungsfläche 6 ist die Oberfläche der Bauteilkomponente 3 aufgeraut und mit einer Oberflächenprofilierung versehen, welche die Reibstruktur 7 bildet. In der Reibungsfläche 6 weist die Bauteilkomponente 3 eine höhere Rauigkeit und damit höhere Reibung auf als benachbarte glatte Oberflächen der Bauteilkomponente 3.

Die Bauteilkomponente gemäß der Darstellung von Figur 1 weist jeweils in der Flanschfläche 10 der in Bildebene linken und rechten Flansche 8 eine Reibungsfläche 6 mit einer Reibstruktur 7 auf. Die Reibungsfläche 6 erstreckt sich in Längsrichtung über nahezu die gesamte Länge eines Flansches 8.

Bei der Bauteilkomponente 3 gemäß der Darstellung von Figur 2 weist ein Flansch 8 eine durchgehende sich über die Länge des Flansches 8 erstreckende Reibungsfläche 6 auf. Der gegenüberliegende Flansch 8 weist mehrere Reibungsflächen 6 auf, die mit Abstand zueinander angeordnet sind.

Eine stoffschlüssige Fügung mit Fügestellen 13 kann in einer Reibungsfläche 6 oder benachbart zu dieser, also außerhalb einer Reibungsfläche 6, vorgesehen sein.

Bei der Ausführungsform einer Bauteilkomponente 3 mit einer Mehrzahl von mit Abstand zueinander angeordneten Reibungsflächen 6 sind Fügestellen 13 im Bereich der glatten Flanschfläche 10 zwischen den Reibungsflächen 6 vorgesehen.

Bei der Bauteilkomponente 3, wie in der Figur 3 dargestellt, sind lokal begrenzte Reibungsflächen 6 jeweils im mittleren Bereich der beiden Flansche 8 angeordnet. Fügestellen 13 können innerhalb einer Reibungsfläche 6 und/oder außerhalb einer Reibungsfläche 6 vorgesehen sein.

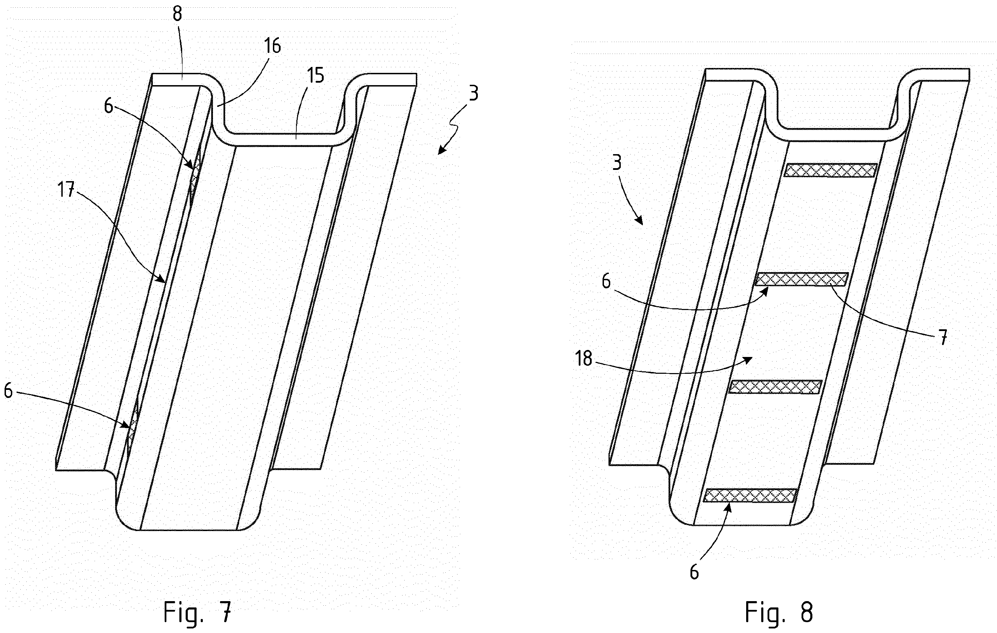

Bei der Bauteilkomponente 3 gemäß der Darstellung von Figur 7 sind Reibungsflächen 6 an der Außenseite 17 der beiden Seitenschenkel 16 vorgesehen. In diesen Bereichen mit der Reibungsfläche 6 kann eine weitere, hier nicht dargestellte Bauteilkomponente, insbesondere eine Crashbox, stoffschlüssig mit der Bauteilkomponente 3 verbunden werden.

Die Ausführungsform einer Bauteilkomponente 3 wie in der Figur 8 dargestellt, weist an der Außenseite 18 des Steg 14 mehrere mit Abstand zueinander angeordnete Reibungsflächen 6 auf. Eine solche Bauteilkomponente 3 kann beispielsweise als Bodenträger zum Einsatz gelangen und ist zur Kopplung mit einer Sitzschiene, also einer weiteren Bauteilkomponente bestimmt.

Die Bauteilkomponenten 3, 4 und/oder 5 bilden zusammengesetzt ein Kraftfahrzeugbauteil 1, 2. Zusammengefügt kontaktieren die Bauteilkomponenten 3, 4 und 5 sich, wobei die Reibungsfläche 6 und eine gegenüberliegende Kontaktfläche 12 aneinander liegen. Bei einer Kollision werden die gefügten Bauteilkomponenten 3, 4, 5 gegeneinander gepresst, wobei die Reibungsfläche 6 der einen Bauteilkomponente 3 bzw. 4 sich in die Kontaktfläche 12 der jeweils anderen Bauteilkomponente 4 bzw. 5 eingräbt. Hierdurch wird eine Bewegung der Bauteilkomponenten 3, 4, 5 relativ zueinander gehemmt.

Bei den zuvor beschriebenen Kraftfahrzeugbauteilen 1, 2, die aus den Bauteilkomponenten 3, 4 und/oder 5 zusammengesetzt sind, kontaktieren sich die Reibungsfläche 6 und eine gegenüberliegende Kontaktfläche 12.

Die Bauteilkomponenten können so konfiguriert sein, dass eine Reibungsfläche und eine der Reibungsfläche gegenüberliegende Kontaktfläche mit Abstand zueinander angeordnet sind. Die Reibungsfläche und die Kontaktfläche sind so konfiguriert und einander zugeordnet, dass sie im Falle einer Kollision gegeneinandergepresst werden, wodurch dann der erfindungsgemäß angestrebte Brems- bzw. Hemmvorgang zwischen den Bauteilkomponenten eintritt.

### Bezugszeichen:

- 1 -: Kraftfahrzeugbauteil
- 2 -: Kraftfahrzeugbauteil
- 3 -: Bauteilkomponente
- 4 -: Bauteilkomponente
- 5 -: Bauteilkomponente
- 6 -: Reibungsfläche
- 7 -: Reibstruktur
- 8 -: Flansch
- 9 -: Flansch
- 10-: Flanschfläche
- 11 -: Flanschfläche
- 12 -: Kontaktfläche
- 13 -: Fügestelle
- 14 -: Reibungselement
- 15 -: Steg
- 16 -: Seitenschenkel
- 17 -: Außenseite v. 16
- 18 -: Außenseite v. 15

- h -: Höhe
- s -: Wandstärke

## Patentansprüche

1. Kraftfahrzeugbauteil (1), welches zumindest zwei metallische Bauteilkomponenten (3, 4, 5) aufweist, welche miteinander gefügt sind, **dadurch gekennzeichnet, dass** mindestens eine Bauteilkomponente (3) zumindest eine Reibungsfläche (6) besitzt, welche eine Reibstruktur (7) aufweist und die Bauteilkomponenten (3, 4, 5) an zumindest einer Fügestelle (13) durch eine Fügung verbunden sind.

2. Kraftfahrzeugbauteil (1) nach Anspruch 1, **dadurch gekennzeichnet, dass** die Reibungsfläche (6) einer Bauteilkomponente (3, 4) dazu eingerichtet und bestimmt ist, bei einem Crash an eine Kontaktfläche (12) einer anderen Bauteilkomponente (4, 5) gepresst zu werden.

3. Kraftfahrzeugbauteil (1) nach Anspruch 1 oder 2, **dadurch gekennzeichnet, dass** die Bauteilkomponenten (3, 4, 5) sich zumindest im Bereich der Reibungsfläche (6) kontaktieren.

4. Kraftfahrzeugbauteil (1) nach Anspruch 1 bis 2, **dadurch gekennzeichnet, dass** die Bauteilkomponenten im Bereich einer Reibungsfläche mit Abstand zueinander angeordnet sind.

5. Kraftfahrzeugbauteil nach einem der Ansprüche 1 bis 4, **dadurch gekennzeichnet, dass** eine Fügestelle (13) im Bereich einer Reibungsfläche (6) und/oder benachbart zu einer Reibungsfläche (6) vorgesehen ist.

6. Kraftfahrzeugbauteil nach einem Ansprüche 1 bis 5, **dadurch** g**ekennzeichnet**, dass die Bauteilkomponenten (3, 4, 5) aneinander liegende Flanschflächen (10, 11) aufweisen, wobei eine Reibungsfläche (6) in der Flanschfläche (10, 11) einer Bauteilkomponente (3, 4) liegt.

7. Kraftfahrzeugbauteil nach einem der Ansprüche 1 bis 6, **dadurch gekennzeichnet, dass** die Reibstruktur (7) nebeneinander angeordnete Reibungselemente (14) aufweist, wobei die Reibungselemente (14) vorzugsweise durch keilförmige und/oder kegelförmige Zähne oder Rippen gebildet sind.

8. Kraftfahrzeugbauteil nach Anspruch 7, **dadurch gekennzeichnet, dass** die Reibungselemente (14) eine Höhe (h) aufweisen und die Bauteilkomponente (3, 4, 5) in einem Bereich benachbart zur Reibungsfläche (6) eine Wandstärke (s) aufweisen, wobei die Höhe (h) zwischen 3 % und 25 % der Wandstärke (s) beträgt und die Höhe (h) bevorzugt zwischen 4 % und 16 % und insbesondere zwischen 5 % und 9 % der Wandstärke (s) bemessen ist.

9. Kraftfahrzeugbauteil nach einem der Ansprüche 1 bis 8, **dadurch gekennzeichnet, dass** die Reibstruktur (7) geprägt und/oder gehärtet ist.

10. Kraftfahrzeugbauteil nach einem der Ansprüche 1 bis 9, **dadurch gekennzeichnet, dass** die zumindest zwei Bauteilkomponenten (3, 4, 5) voneinander verschiedene Härten besitzen, wobei die zumindest eine Reibungsfläche (6) in der härteren Bauteilkomponente (3) vorgesehen ist.

11. Kraftfahrzeugbauteil nach einem der Ansprüche 1 bis 10, **dadurch gekennzeichnet, dass** zumindest eine Bauteilkomponente (3, 4, 5) aus einem härtbaren Stahl besteht und warm umgeformt ist, wobei die Reibstruktur (7) durch Prägen im Umformwerkzeug erzeugt ist und die Bauteilkomponente (3, 4, 5) pressgehärtet ist.

12. Kraftfahrzeugbauteil nach einem der Ansprüche 1 bis 11, **dadurch gekennzeichnet, dass** eine stoffschlüssige Fügung durch Schweißen, Löten oder Kleben hergestellt ist.

13. Kraftfahrzeugbauteil nach einem der Ansprüche 1 bis 12, **dadurch gekennzeichnet, dass** die miteinander gefügten Bauteilkomponenten (3, 4, 5) ein Hohlprofil bilden.

## Geänderte Patentansprüche

### Geänderte Patentansprüche gemäss Regel 137(2) EPÜ.

1. Kraftfahrzeug-Strukturbauteil (1), welches zumindest zwei metallische Bauteilkomponenten (3, 4, 5) aufweist, welche miteinander gefügt sind, wobei mindestens eine Bauteilkomponente (3) zumindest eine Reibungsfläche (6) besitzt, welche eine Reibstruktur (7) aufweist und die Bauteilkomponenten (3, 4, 5) an zumindest einer Fügestelle (13) durch eine Fügung verbunden sind, **dadurch gekennzeichnet, dass** die Reibungsfläche (6) einer Bauteilkomponente (3, 4) dazu eingerichtet und bestimmt ist, bei einem Crash an eine Kontaktfläche (12) einer anderen Bauteilkomponente (4, 5) gepresst zu werden und die Reibstruktur (7) nebeneinander angeordnete Reibungselemente (14) aufweist, wobei die Reibungselemente (14) durch keilförmige und/oder kegelförmige Zähne oder Rippen gebildet sind, wobei die Reibungselemente (14) eine Höhe (h) aufweisen und die Bauteilkomponente (3, 4, 5) in einem Bereich benachbart zur Reibungsfläche (6) eine Wandstärke (s) aufweist, wobei die Höhe (h) zwischen 3 % und 25 % der Wandstärke (s) beträgt.

2. Kraftfahrzeug-Strukturbauteil (1) nach Anspruch 1, **dadurch gekennzeichnet, dass** die Bauteilkomponenten (3, 4, 5) sich zumindest im Bereich der Reibungsfläche (6) kontaktieren.

3. Kraftfahrzeug-Strukturbauteil (1) nach Anspruch 1, **dadurch gekennzeichnet, dass** die Bauteilkomponenten im Bereich einer Reibungsfläche mit Abstand zueinander angeordnet sind.

4. Kraftfahrzeug-Strukturbauteil nach einem der Ansprüche 1 bis 3, **dadurch gekennzeichnet, dass** eine Fügestelle (13) im Bereich einer Reibungsfläche (6) und/oder benachbart zu einer Reibungsfläche (6) vorgesehen ist.

5. Kraftfahrzeug-Strukturbauteil nach einem Ansprüche 1 bis 4, **dadurch gekennzeichnet, dass** die Bauteilkomponenten (3, 4, 5) aneinander liegende Flanschflächen (10, 11) aufweisen, wobei eine Reibungsfläche (6) in der Flanschfläche (10, 11) einer Bauteilkomponente (3, 4) liegt.

6. Kraftfahrzeug-Sturkturbauteil nach Anspruch 5, **dadurch gekennzeichnet, dass** die Höhe (h) zwischen 4 % und 16 % und insbesondere zwischen 5 % und 9 % der Wandstärke (s) bemessen ist.

7. Kraftfahrzeug-Strukturbauteil nach einem der Ansprüche 1 bis 6, **dadurch gekennzeichnet, dass** die Reibstruktur (7) geprägt und/oder gehärtet ist.

8. Kraftfahrzeug-Strukturbauteil nach einem der Ansprüche 1 bis 7, **dadurch gekennzeichnet, dass** die zumindest zwei Bauteilkomponenten (3, 4, 5) voneinander verschiedene Härten besitzen, wobei die zumindest eine Reibungsfläche (6) in der härteren Bauteilkomponente (3) vorgesehen ist.

9. Kraftfahrzeug-Strukturbauteil nach einem der Ansprüche 1 bis 8, **dadurch gekennzeichnet, dass** zumindest eine Bauteilkomponente (3, 4, 5) aus einem härtbaren Stahl besteht und warm umgeformt ist, wobei die Reibstruktur (7) durch Prägen im Umformwerkzeug erzeugt ist und die Bauteilkomponente (3, 4, 5) pressgehärtet ist.

10. Kraftfahrzeug-Strukturbauteil nach einem der Ansprüche 1 bis 9, **dadurch gekennzeichnet, dass** eine stoffschlüssige Fügung durch Schweißen, Löten oder Kleben hergestellt ist.

11. Kraftfahrzeug-Strukturbauteil nach einem der Ansprüche 1 bis 10, **dadurch gekennzeichnet, dass** die miteinander gefügten Bauteilkomponenten (3, 4, 5) ein Hohlprofil bilden.
